# EUROPEAN PATENT SPECIFICATION

(11) **EP 1 580 089 B1**
(45) Date of publication and mention of the grant of the patent: **03.10.2007**
(21) Application number: 04253510.4
(22) Date of filing: 11.06.2004
(51) Int. Cl.: B60R 22/26, B60R 22/195, B60R 22/02

(54) **Belt pretensioner**
Gurtstraffer
Prétensionneur de ceinture

(30) Priority: 22.03.2004 EP 04251646
(43) Date of publication of application: 28.09.2005
(73) Proprietor: KEY SAFETY SYSTEMS, INC., Sterling Heights, MI 48314 (US)
(72) Inventor: Bell, John, Carlisle, Cumbria, CA2 6QU (GB); Jack, Brian A, Eastriggs, Annan, Dumfiesshire, DG12 6PR (GB)
(74) Representative: Freeman, Jacqueline Carol

(56) References cited:
- WO-A-95/31359
- FR-A- 2 765 537
- US-B1- 6 213 513

## Description

The present invention relates to a pretensioner and particularly to a pretensioner for a vehicle safety restraint mechanism such as a seat belt.

Traditionally a seat belt safety restraint comprises a length of belt webbing connected at three points to load bearing parts of a vehicle. Typically one end is bolted to a door sill on one side of the seat, arranged to pass laterally across the hips of the seat occupant to a buckle mechanism fixed to the vehicle on the opposite side of the seat, and then diagonally across the torso of the occupant to a further fastening point on the B pillar of the door. The buckle mechanism engages a buckle tongue slidably attached to the webbing.

To increase comfort for the occupant restrained by the belt, a retractor is fitted at the pillar end of the webbing. This allows the webbing to pay out under relatively low loads to enable limited movement of the restrained occupant, for example to reach in-car entertainment controls or storage compartments. The retractor is biased to keep the webbing relatively taut about the occupant and a locking element is included to lock the retractor against webbing pay out in the event of a dangerous situation being detected. For example, an acceleration sensor activates if the vehicle undergoes rapid acceleration or deceleration indicative of a crash.

In recent years, pretensioners have been introduced to rapidly pull in a length of webbing to actively tighten the belt about the vehicle occupant in the event of a crash condition being sensed. This takes up any slack which may have developed in the belt and helps to more correctly position the occupant in the seat to maximise the effect of the belt protection and of any secondary safety restraint such as an air bag.

Pretensioners comprise a force reservoir such as a pyrotechnically operated gas generator to provide an impulse of sufficient magnitude to tighten the belt in a short space of time, ideally before the crash pulse takes full effect. A typical known pretensioner may use rotational means to wind in a length of seat belt webbing, for example by rotating the retractor spool in a webbing rewind direction to take in the required length of webbing prior to the retractor locking against webbing pay out.

Some examples of known pretensioning mechanisms are shown in US 6 213 513 which discloses the features of the preamble of claim 1 and FR 2 765 537. These are buckle pretensioners in which the buckle head is attached to one end of a flexible cable. In US 6 213 513 the other end of the cable is looped around a piston which moves inside and along a cylinder to draw back the buckle. In FR 2 765 537 the other end of the cable is anchored to a seat and the cable is pulled aside, in a generally perpendicular direction compared to the line of the cable.

WO 95/31359 shows a seat anchorage for a rear seat, which uses a bobbin moving along a slider bar to adjust the position of the anchorage but does not suggest the use of this in the field of pretensioning.

However, known pretensioners tend to be bulky, and are particularly difficult to use for the driver, and front passenger, seats of a three door vehicle because of the requirement to allow access to the rear of the vehicle past the front seats. Using a traditional retractor pretensioner mechanism in a front seat of a three door vehicle causes an unacceptable obstruction.

Seat travel is greater in a three door vehicle than in a four door vehicle in order to provide such access and to accommodate this the door sill end of the webbing is usually attached to a so-called slider bar of well known design, instead of being fixedly bolted to the floor. This allows the sill end of the webbing to be moved longitudinally forward and rearward to facilitate rear seat access and front seat movement.

The present invention provides an improved pretensioning mechanism which can be used in three-door, front seat applications.

According to the present invention there is provided a pretensioner for a three point vehicle safety restraint seat belt, comprising: a mounting for one end of the seat belt, the mounting comprising a first member adapted to be fixed in a load bearing manner to the vehicle and a second member, and means for moving the second member translationally relative to the first member in a pretensioning direction in response to activation of a crash sensor, characterised in that the second member is connected to one end of a flexible cable arranged in a loop form profile, the other end of said flexible cable is connected in a load bearing manner to the vehicle, and said one end of the seat belt is looped around said flexible cable.

The flexible member forms a loop, in the general form of a slider bar, which provides flexibility of movement for the webbing and access to the rear of a vehicle, as is required in two-door applications.

According to one embodiment the means for moving the second member comprises a force reservoir such as a pyrotechnic unit, i.e., a pyrotechnically operated gas piston-cylinder arrangement. Such a pyrotechnic unit is particularly suited to this application since it provides an impulse of the required magnitude over a short time period.

In a preferred embodiment of the invention the first member is a rail and the second member is arranged to slide along the rail upon activation of the force reservoir. Preferably the second member is arranged to slide in only the pretensioning direction and is restrained from return motion in the opposite direction, for example by a ratchet mechanism comprising teeth which may be incorporated into a surface of the rail.

Locking the pretensioner against return movement in this way prevents a loss of tension in the seat belt after pretensioning has been carried out. Ratchet mechanisms are known for different seat belt restraint applications and so the pretensioner of the present invention can advantageously be constructed using standard parts and manufacturing processes, and thus offers a relatively low cost locking mechanism.

The piston-cylinder arrangement, which is advantageously located below the rail, may be connected by a cable to the second member such that activation of the force reservoir drives the piston along the cylinder and the piston pulls the cable and thus pulls the second member along the rail to effect pretensioning.

The use of a rail is particularly beneficial since the pretensioning action can be constrained to a linear motion in one direction in a simple manner and without the need for complicated or bulky rotating parts.

Positioning the piston and cylinder below the rail advantageously reduces the overall size of the pretensioner.

According to a preferred embodiment, the load bearing part of the vehicle is a longitudinal chassis member such as the front door sill.

In one embodiment the second member may be connected to the seat belt webbing via a slider bar to provide suitable compact anchorage with flexibility to allow access to rear seats in a three-door vehicle.

The second member may be directly attached to, or form at least a part of, the piston of the piston-cylinder arrangement which is preferably operated pyrotechnically. This can provide an even more space saving alternative for two-door applications of pretensioners.

The loop profile of the cable may be retained by clips or by a plastic coating or by a flexible tube enclosing the cable.

The piston-cylinder arrangement may incorporate means to allow the second member to only move in a pretensioning direction, for example by ratchet teeth on the inside of the cylinder and at least one cooperating tooth on the piston.

Advantageously the crash sensor is activated when the vehicle exceeds a predetermined acceleration or deceleration threshold.

Pretensioners can be constructed according to the invention which have reduced or eliminated obstruction to rear seat access, smaller package sizes and which are attached to an appropriate sill anchorage zone.

For a better understanding of the present invention, and to show how the same may be carried into effect, reference will now be made, by way of example, to the accompanying drawings, in which:

The embodiment of Figures 1 to 5 is not in accordance with the invention but they are included to illustrate various individual features relevant to the invention.
Figure 1 is a schematic side view of a pretensioner;
Figure 2 is an enlarged view of part of the pretensioner of figure 1 before pretensioning;
Figure 3 is an enlarged view of part of the pretensioner of figure 1 after pretensioning;
Figure 4 is a side view of an alternative arrangement of the pretensioner of figure 1;
Figure 5 is an enlarged perspective view of the carriage and rail arrangement of figure 1;
Figure 6 is a schematic side view of a pretensioner according to the present invention.

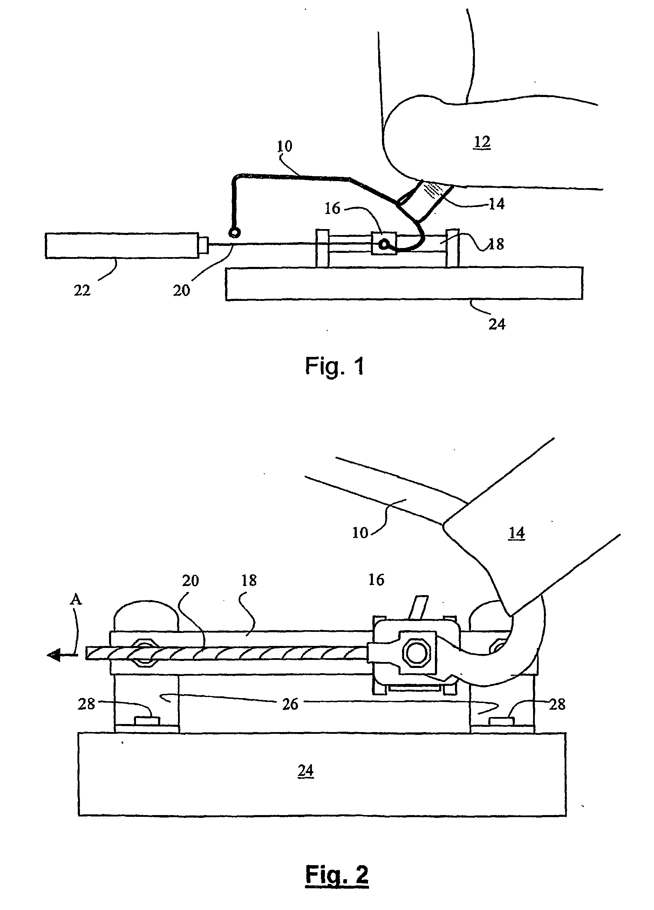

In figure 1, a slider bar 10 is positioned adjacent to a front seat 12 of a vehicle. One end of seat belt webbing 14 passes around the slider bar 10 and is free to move back and forth along the slider bar 10.

The seat belt webbing 14 is of a conventional design and is attached at one end to a retractor mounted, adjacent a seat, to a load bearing part of the vehicle such as a vehicle side pillar (not shown). The webbing passes through a shoulder support also attached to the side pillar and has a buckle tongue, which is insertable into a buckle (not shown) located on the other side of the seat.

When in use, the seat belt webbing 14 is at one end of the slider bar 10 in the load bearing position shown in Fig. 1 . When the seat belt is not in use the end of the webbing 14 may be moved in a rearward direction along the slider bar 10 so that it does not obstruct access to the rear seat of the vehicle.

One end of the slider bar 10 is attached to a carriage 16 which is mounted on a rail 18. A cable 20 extends between the carriage 16 and a pyrotechnic unit 22. The pyrotechnic unit 22 is of a known type and contains a piston within a cylindrical housing and a gas generator. The gas generator is pyrotechnically activated to provide an impulse which forces the piston in a rearward direction and tensions the cable 20.

Figure 2 shows one arrangement of the carriage 16 and the rail 18 in greater detail. The rail 18 is attached at each end to support members 26 which are fixed to a load bearing chassis member 24 by means of bolts 28. Such a load bearing chassis member 24 may be a chassis member extending in a longitudinal direction down each side of the vehicle, or a load bearing door sill and provides a suitable load bearing anchorage zone for the slider bar 10 adjacent to and slightly to the rear of each of the vehicle doors.

Prior to pretensioning, the carriage 16 is positioned for normal use of the seat belt webbing 14 at its forward most position, at the right hand side as shown in figure 2 of the rail 18. Upon sensing an acceleration of the vehicle above a predetermined criteria, a crash sensor, in known manner, generates a signal indicative of a crash condition which causes the pyrotechnic unit 22 to fire, creating a tension in the metal cable 20. The tension in the cable 20 pulls the carriage 16 and the slider bar 10 in a rearward direction i.e. the direction of arrow A in figure 2. The carriage 16 can be arranged to move rearwardly a distance in the region of 50 to 150 mm depending on the vehicle size and requirements.

The sudden movement of the slider bar 10 in a rearward direction provides tension in the seat belt webbing 14, which takes up any slack in the webbing 14 and pulls an occupant backwards into the seat 12 so as to correctly position the occupant within the seat 12 in order to maximise the benefit of the seat belt and correctly position him for maximum effect of any secondary restraint such as an air bag.

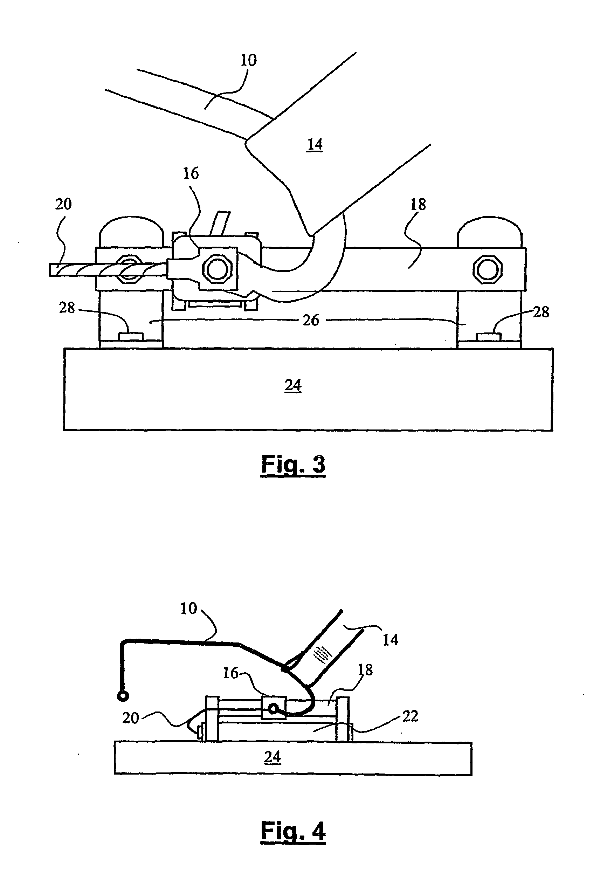

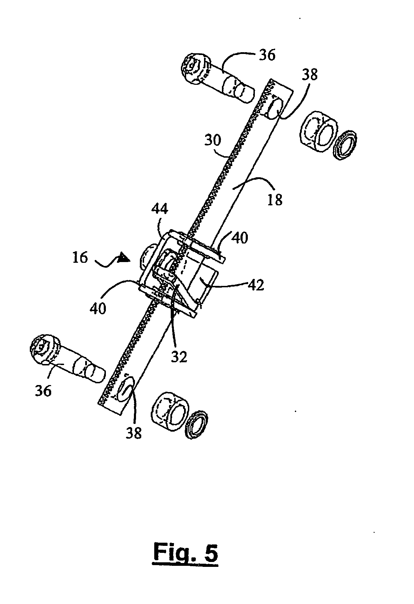

Figure 3 shows the position of the carriage immediately after pretensioning. After the pyrotechnic unit has fired, the carriage 16 is prevented from returning to its original position under the forward momentum of the occupant during a crash, by a ratchet mechanism within the carriage forming the second member 16. This ratchet mechanism is is shown more clearly in figure 5, described later.

In figure 5 the ratchet mechanism is shown. The rail 18 is attached at each of its ends to respective support members 26 by means of bolts 36 passing through cylindrical holes 38 at each end of the rail 18. Locking ratchet teeth 30 are formed in one surface of the rail 18. The carriage 16 has two end plates 40 and a base plate 42 attached to a side wall 44. A locking lever 32 extends from the base plate 42. Each of the end plates 40 and the locking lever 32 have a slot, allowing the rail 18 to pass through the centre of the carriage 16.

An inner surface of the locking lever 32 is in contact with the teeth 30 in the surface of the rail 18 and is orientated at an angle such that the locking lever 32 can pass over the teeth 30 in one direction. However the locking lever 32 is biased such that if it tries to move in the opposite direction, a locking edge of the inner surface of the locking lever 32 will be caught against a tooth 30 on the upper surface of the rail 18 and thus prevents the carriage 16 from sliding in a reverse direction. To facilitate this the teeth 30 may be of a saw-tooth form.

The slider bar 10, the carriage 16 and ratchet mechanism, the rail 18, the support members 26 and the bolts 28, 36 and 46 are all preferably made of metal. The ratchet mechanism and the carriage 16 may be formed from both parts of a height adjuster traditionally used to alter the height of the belt shoulder support.

In figure 4 the pyrotechnic unit is shown stored beneath the rail 18 and the bolts 36 and corresponding holes 38 in the rail may be used to fix the pyrotechnic unit 22 in relation to the rail 18. The operation of the pretensioner in figure 4 is substantially the same as that shown in figure 1, except that the cable 20 bends 180° in order to cater for the different orientation of the pyrotechnic unit 22.

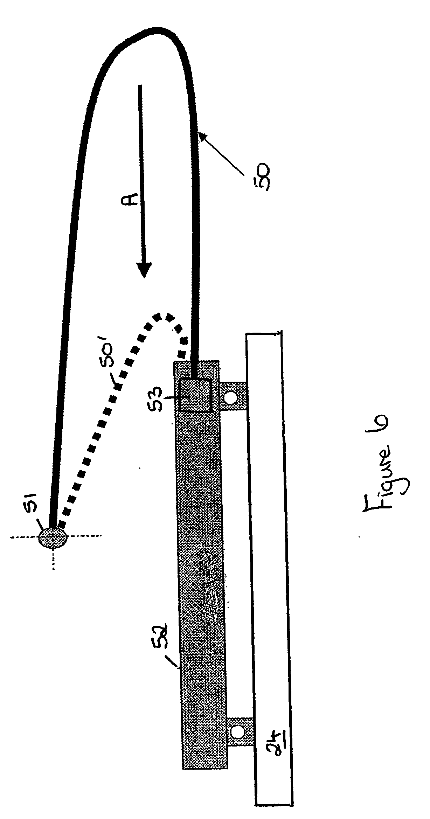

Figure 6 shows an arrangement according to the invention in which the slider bar of figures 1 to 5 is effectively replaced by a flexible cable 50.

The seat belt webbing (not shown) is looped round the cable 50 in the same manner as with the slider bar 10 of figure 1 and the cable provides similar versatility of movement for the webbing mounting, and at least the same degree of access to rear seats.

One end 51 of the cable 50 is fixedly attached to a load bearing part of the vehicle such as the sill, and the other end is attached to a piston 53 of a piston-cylinder pyro unit 52 which is fixed to a load bearing part of the vehicle such as the floor of the vehicle, particularly so as to retain the door profile and avoid inhibiting access through the door.

The cable 50 forms a loop profile as shown in the figure and can be encouraged to hold such a profile in normal use by retaining clips or by a plastic coating. Alternatively a flexible tube may cause the cable 50 to increase its stiffness to the appropriate degree.

When a crash sensor indicates that a sudden deceleration or acceleration is taking place, the pyro unit 52 is pyrotechnically activated to release gas to push the piston along the cylinder in the direction of arrow A, causing the cable 50 to retract to the profile indicated by the broken line 50. This causes the seat belt webbing mounting on the cable 50 to be pulled back in the direction of arrow A thus effecting the required pretensioning exercise.

A ratchet, or other form of non-return mechanism may be built into the pyro unit 52.

Of course elements of the arrangements of figures 1 to 4 may be combined with the invention of figure 6. For example the cable 50 could be attached to an arrangement such as the carriage 16 sliding on the rail 18, of figure 1. The pyro unit 52 could then be connected to the carriage 16 by another cable such as 20 in figure 1 and be mounted either in line with, or below, the rail 18.

## Claims

1. A pretensioner for a three point vehicle safety restraint seat belt (14), comprising:
a mounting for one end of the seat belt (14), the mounting comprising a first member (52) adapted to be fixed to a load bearing part of the vehicle and a second member (53), and
means for moving the second member (53) translationally relative to the first member (52) in a pretensioning direction in response to activation of a crash sensor
**characterised in that** the second member is connected to one end of a flexible cable (50) arranged in a loop form profile,
the other end (51) of said flexible cable (50) is connected in to a load bearing part of the vehicle, and
said one end of the seat belt (14) is looped around said flexible cable (50).

2. A pretensioner according to claim 1 wherein the first member (52) comprises a rail (18) and the second member (53) comprises a piston mounted for movement in a cylinder; and the piston (53) is connected to a carriage (16) by a second cable (20) and the carriage (16) is mounted for movement along the rail (18), wherein the flexible cable (50) is connected to the carriage at said one end.

3. A pretensioner according to claim 1 or 2 wherein the flexible cable (50) is held in a loop form profile by releasable clips.

4. A pretensioner according to claim 1, 2 or 3 wherein the flexible cable (50) is coated with plastics material.

5. A pretensioner according to any one of claims 1 to 4 wherein the flexible cable (50) is enclosed in a tube of plastics material.

6. A pretensioner according to any one of the preceding claims wherein the means for moving the second member (53) comprises a force reservoir.

7. A pretensioner according to claim 6 wherein the force reservoir comprises a gas generator which is pyrotechnically activated.

8. A pretensioner according to any one of the preceding claims wherein first member (52) comprises a cylinder and the second member (53) comprises a piston disposed inside the cylinder such that activation of the force reservoir drives the piston along the cylinder.

9. A pretensioner according to claim 8 when appended to claim 2 wherein the piston and the cylinder are located below the rail (18).

10. A pretensioner according to any one of the preceding claims wherein the first member (52) comprises means for restraining motion of the second member (53) in a non-pretensioning direction.

11. A pretensioner according to claim 10 wherein the restraining means comprises ratchet teeth incorporated in the first member (52) and at least one cooperating tooth incorporated in the second member (53).

## Patentansprüche

1. Gurtstraffer für einen Fahrzeug-Dreipunktsicherheitsgurt (14), umfassend:
eine Befestigung für ein Ende eines Gurts (14), wobei die Befestigung ein erstes Bauelement (52), das zum Befestigen an ein tragendes Teil des Fahrzeugs eingerichtet ist und ein zweites Bauelement (53) umfasst, und
Mittel zum Bewegen des zweiten Bauelements (53) translatorisch relativ zum ersten Bauelement (52) in einer straffenden Richtung als Reaktion auf Betätigung eines Crash-Sensors,
**dadurch gekennzeichnet, dass** das zweite Bauelement mit einem Ende eines flexiblen Kabels (50) verbunden ist, das in einem Schleifenförmigen Profil angeordnet ist,
das andere Ende (51) des flexiblen Kabels (50) in einen tragenden Teil des Fahrzeugs gekuppelt ist, und
das eine Ende des Gurts (14) schleifenförmig um das flexible Kabel (50) gewunden ist.

2. Gurtstraffer nach Anspruch 1, wobei das erste Bauelement (52) eine Schiene (18) umfasst und das zweite Bauelement (53) einen zur Bewegung in einem Zylinder montierten Kolben umfasst; und der Kolben (53) mit einem Wagen (16) durch ein zweites Kabel (20) verbunden ist und der Wagen (16) zur Bewegung entlang der Schiene (18) montiert ist, wobei das flexible Kabel (50) am einen Ende mit dem Wagen verbunden ist.

3. Gurtstraffer nach Anspruch 1 oder 2, wobei das flexible Kabel (50) durch lösbare Clipse in einem schleifenförmigen Profil gehalten wird.

4. Gurtstraffer nach Anspruch 1, 2 oder 3, wobei das flexible Kabel (50) mit Kunststoffmaterial beschichtet ist.

5. Gurtstraffer nach einem der Ansprüche 1 bis 4, wobei das flexible Kabel (50) in einem Rohr aus Kunststoffmaterial eingeschlossen ist.

6. Gurtstraffer nach einem der vorhergehenden Ansprüche, wobei das Mittel zum Bewegen des zweiten Bauelements (53) ein Kraftreservoir umfasst.

7. Gurtstraffer nach Anspruch 6, wobei das Kraftreservoir einen Gasgenerator umfasst, der pyrotechnisch betätigt wird.

8. Gurtstraffer nach einem der vorhergehenden Ansprüche, wobei das erste Bauelement (52) einen Zylinder umfasst und das zweite Bauelement (53) einen Kolben umfasst, der im Zylinder so angeordnet ist, dass Betätigung des Kraftreservoirs den Kolben dem Zylinder entlang treibt.

9. Gurtstraffer nach Anspruch 8, wenn an den Anspruch angehängt, wobei sich der Kolben und der Zylinder unterhalb der Schiene (18) befinden.

10. Gurtstraffer nach einem der vorhergehenden Ansprüche, wobei das erste Bauelement (52) Mittel zum Rückhalten von Bewegung des zweiten Bauelements (53) in einer nicht straffenden Richtung umfasst.

11. Gurtstraffer nach Anspruch 10, wobei das Rückhaltemittel Schaltradzähne umfasst, die im ersten Bauelement (52) enthalten sind und mindestens einen damit zusammenarbeitenden Zahn im zweiten Bauelement (53) enthält.

## Revendications

1. Prétendeur pour une ceinture de sécurité de véhicule de retenue de sécurité à trois points (14), comprenant:
une monture pour une extrémité de la ceinture de sécurité (14), la monture comprenant un premier élément (52) conçu pour être fixé à une partie porteuse du véhicule et un second élément (53), et
un moyen pour déplacer le second élément (53) en translation par rapport au premier élément (52) dans une direction de pré-tension en réponse à l'activation d'un détecteur d'impact,
**caractérisé en ce que** le second élément est raccordé à une extrémité d'un câble souple (50) configuré selon un profil en forme de boucle,
l'autre extrémité (51) dudit câble souple (50) est raccordée à une partie porteuse du véhicule, et
ladite première extrémité de la ceinture de sécurité (14) est enroulée autour dudit câble souple (50).

2. Prétendeur selon la revendication 1, dans lequel le premier élément (52) comprend un rail (18) et le second élément (53) comprend un piston monté pour réaliser un déplacement dans un cylindre; et le piston (53) est raccordé à un chariot (16) par un second câble (20) et le chariot (16) est monté pour réaliser un déplacement le long du rail (18), dans lequel le câble souple (50) est raccordé au chariot au niveau de ladite première extrémité.

3. Prétendeur selon la revendication 1 ou 2, dans lequel le câble souple (50) est retenu selon un profil en forme de boucle par des agrafes libérables.

4. Prétendeur selon la revendication 1, 2 ou 3, dans lequel le câble souple (50) est revêtu d'une matière plastique.

5. Prétendeur selon l'une quelconque des revendications 1 à 4, dans lequel le câble souple (50) est enfermé dans un tube de matière plastique.

6. Prétendeur selon l'une quelconque des revendications précédentes, dans lequel le moyen pour déplacer le second élément (53) comprend un réservoir de force.

7. Prétendeur selon la revendication 6, dans lequel le réservoir de force comprend un générateur de gaz qui est activé de manière pyrotechnique.

8. Prétendeur selon l'une quelconque des revendications précédentes, dans lequel le premier élément (52) comprend un cylindre et le second élément (53) comprend un piston disposé à l'intérieur du cylindre de sorte que l'activation du réservoir de force entraîne le piston le long du cylindre.

9. Prétendeur selon la revendication 8, lorsqu'elle est annexée à la revendication 2, dans lequel le piston et le cylindre sont situés au-dessous du rail (18).

10. Prétendeur selon l'une quelconque des revendications précédentes, dans lequel le premier élément (52) comprend un moyen pour empêcher le déplacement du second élément (53) dans une direction qui n'est pas la direction de pré-tension.

11. Prétendeur selon la revendication 10, dans lequel le moyen d'empêchement comprend des dents de rochet incorporées dans le premier élément (52) et au moins une dent coopérante incorporée dans le second élément (53).
